# EUROPÄISCHE PATENTANMELDUNG

(11) **EP 2 600 270 A1**
(43) Veröffentlichungstag der Anmeldung: **05.06.2013**
(21) Anmeldenummer: 11191675.5
(22) Anmeldetag: 02.12.2011
(51) Int. Cl.: G06F 21/00

(54) **Identifikations-Element-basierte Authentisierung und Identifizierung mit verteilter Dienstnutzung**

(71) Anmelder: Deutsche Telekom AG, 53113 Bonn (DE); Technische Universität Darmstadt, 64289 Darmstadt (DE)
(72) Erfinder: Baumöller, Claas, 53175 Bonn (DE); Schaaf, Joachim, 64293 Darmstadt (DE); Horsch, Moritz, 64283 Darmstadt (DE); Wiesmaier, Alexander, 63924 Kleinheubach (DE); Braun, Johannes, 64846 Groß-Zimmern (DE)
(74) Vertreter: Vossius & Partner

(57) **Zusammenfassung**

Die vorliegende Erfindung beschreibt ein Verfahren zur Authentifizierung und Identifizierung eines Benutzers anhand eines personalisierten Identifikations-Elements zur Nutzung von Diensten, wobei ein Computersystem für die Nutzung und ein Computersystem für den Authentifizierungs- bzw. Identifizierungsprozess verwendet wird.

Es ist Stand der Technik, dass Identifikations-Elemente für eine sichere Authentisierung benutzt werden. Ebenfalls haben sich mobile Endgeräte als Terminals für interne oder externe Identifikations-Elemente etabliert. Die Verfahren gemäß des Standes der Technik haben insbesondere den Nachteil, dass die Authentisierung und Nutzung eines Dienstes auf dem gleichen Computersystem stattfinden und so erhebliche Sicherheitsrisiken bestehen. Diese resultieren insbesondere durch das Aufzeichnen der PIN zum Freischalten des Identifikations-Elements und somit einem Missbrauch durch unberechtigte Dritte.

Die vorliegende Erfindung kompensiert diese Sicherheitsrisiken und bietet eine zusätzliche Mehr-Kanal-Authentisierung auf Basis mehrerer Vertrauensanker. Damit kann die Sicherheit des Passwortes (z.B. einer PIN) des Benutzers, was im Allgemeinen zum Freischalten des Identifikations-Elements bzw. zur Authentisierung des Benutzers gegenüber dem Identifikations-Element verwendet wird, auch bei der Dienstnutzung über ein nicht sicheres Computersystem gewahrt bleiben.

## Beschreibung

### Gebiet der Erfindung

Die vorliegende Erfindung beschreibt ein Verfahren zur Authentifizierung und Identifizierung eines Benutzers anhand eines personalisierten Identifikations-Elements zur Nutzung von Diensten, wobei ein Computersystem für die Nutzung und ein Computersystem für den Authentifizierungs- bzw. Identifizierungsprozess verwendet wird.

### Stand der Technik

In heutigen verteilten Systemen besteht eine Trennung zwischen den Dienstanbietern (Service Provider, SP) und der Identitätsverwaltung (Identity Provider, IdP). Dabei wird die Authentisierung und Identifizierung von Benutzern zentral für Dienste durch einen IdP realisiert. Für eine sichere Authentisierung werden dabei immer häufiger elektronische Ausweisdokumente (im Folgenden auch "Identifikations-Elemente" genannt) verwendet, weil durch einen Identitätsnachweis auf Basis von Wissen (geheimes Passwort) und Besitz (Mentifikations-Element) ein höheres Sicherheitsniveau erreicht werden kann. Klassische Verfahren auf Basis von Benutzerkennung und Passwort sind hingegen deutlich anfälliger gegen Identitätsdiebstahl. Des Weiteren ist eine sichere Authentisierung auch im mobilen Bereich immer wichtiger und durch die stetig steigende Verbreitung von mobilen Geräten gewinnen diese in einem sicheren Authentisierungsprozess eine immer stärkere Bedeutung.

Im Allgemeinen beinhaltet das Szenario einen Dienstanbieter (SP), der Angebote und Dienstleistungen über ein Netzwerk, wie beispielswiese das Internet, bereitstellt und für den Zugriff auf seine Dienste eine Authentisierung oder Identifizierung der Kunden fordert. Die Authentisierung bzw. Identifizierung wird jedoch nicht direkt durch den Dienstanbieter durchgeführt, sondern durch einen Identity Provider (IdP). Dieser führt die Authentisierung oder Identifizierung durch und bestätigt diese gegenüber dem Dienstanbieter, beispielsweise mit Hilfe eines Computersystems (im Folgenden als "Identitätsverwaltungs-Computersystem" bezeichnet). Diese verteilte Identitätsverwaltung findet sich beispielsweise beim elektronischen Identitätsnachweis des neuen Personalausweises, OpenID, SAML, Shibboleth und allgemeinen Single Sign-on (SSO) Lösungen.

In der WO 2000/059 244 A1 (Method and system for the transmission of information) wird ein Mobilfunktelefon zur Authentisierung bzw. zum Ent-/Verschlüsseln von Daten verwendet. Das mobile Gerät dient als Terminal für die darin enthaltene SIM (Subscriber Identity Module) Karte. Die SIM Karte fungiert als sicherer Schlüsselspeicher und vertrauenswürdiges Sicherheitsmodul. Das Mobilfunkgerät ist mit einem Computersystem verbunden, wobei kabelgebundene als auch kontaktlos Verbindungen möglich sind. Ein weiteres entferntes Computersystem kann verschlüsselte Daten an das lokale Computersystem schicken. Diese werden dann vom Computersystem an das Mobilfunktelefon bzw. die SIM Karte weitergeleitet und entschiüsselt.

Der Ansatz aus der WO 2000/059 244 A1 ist jedoch auf den Funktionsumfang der SIM Karte beschränkt. In der DE 10 262 183 B4 (Mobiles Telekommunikationsgerät und Chipkartensystem) wird ein Mobilfunktelefon zur Authentisierung mit beliebigen Anwendungen, die auf der SIM Karte des Gerätes installiert sind, beschrieben. Die Anwendungen können dann für (komplexe) Anmeldeprozesse verwendet werden.

Für komplexere Mechanismen und Verfahren beschreibt die DE 10 300 898 A1 (Authentifizierungsmodul) ein eigenes Sicherheitsmodul innerhalb eines Mobilfunktelefons, dass zur Authentisierung des Nutzers gegenüber einem Netzwerk eines Mobilfunksystems verwendet werden kann.

Die DE 19 724 901 A1 (Mobilfunktelefon sowie solche mit gekoppeltem Rechner für Internet- bzw. Netzanwendungen und Verfahren zum Betreiben einer solchen Gerätekombination) beschreibt ein Mobilfunktelefon, das mit einem Rechner verbunden ist, so dass auf die Chipkarte innerhalb des mobilen Gerätes zugegriffen werden kann. Mit dem Mobilfunktelefon und dem Rechner kann insbesondere auf Dienste von entfernten Dienstanbietern zugegriffen werden.

Die DE 10 2007 006 659 A1 (Mobiles Echtzeit Bezahlsystem) beschreibt ein mobiles Bezahlsystem bei dem sich das Mobilfunktelefon des Kunden mittels kontaktloser Schnittstelle mit einem Kassensystem verbindet und die Zahlungsaufforderung erhält. Diese wird dann an ein entferntes Computersystem übermittelt, welches die Bonität überprüft und die Echtheit der Händlerdaten verifiziert.

Die DE 10 2007 037 442 A1 (Verfahren zum Kontrollieren eines mobilen Endgerätes) beschreibt ein Mobilfunktelefon mit einer NFC (Near Field Communication) Schnittstelle das für digitale Fahrscheine verwendet werden kann. Dabei wird ein Fahrschein auf der SIM Karte des Geräts gespeichert und an ein Prüfgerät per NFC-Sehnittstelle zur Verifikation übertragen.

Die beschriebenen Verfahren setzen im Allgemeinen auf eine Authentisierung auf Basis eines integrierten Sicherheitsmoduls (z.B. SIM Karte). Damit besteht eine starke Kopplung zwischen Gerät und dem personalisierten Identifikations-Element welches zur Authentisierung verwendet wird. Diese Verknüpfung ist nicht in allen Fällen sinnvoll.

Die EP 2 182 493 A1 (Remote authentication using NFC) beschreibt ein Verfahren bei dem ein NFC-fähiges Mobilfunktelefon verwendet wird, das sich in einem ersten Schritt mittels der SIM Karte gegenüber einem Mobilfunkprovider authentisiert. In einem zweiten Schritt erfolgt eine Authentisierung gegenüber einem entfernten Dienstanbieter und einem externen Identifilcations-Element, das mit dem Mobilfunktelefon per NFC-Schnittstelle kommuniziert.

Die DE 10 2009 001 959 A1 (Verfahren zum Lesen von Attributen aus einem Identifikations-Element über eine Mobilfunkverbindung) betrachtet ein Szenario bei dem ein Nutzer auf einem Computersystem die Dienste von einem entfernten Computersystem eines Dienstanbieters nutzen möchte. Die Authentisierung für den Zugriff erfolgt durch einen weiteren, entfernten Identity Provider. Das Computersystem des Nutzers ist mit einem Kartenleser verbunden, so dass ein personalisiertes Identifikations-Element für die Authentisierung verwendet werden kann.

Die DE 10 2008 000 067 A1 (Verfahren zum Lesen von Attributen aus einem Identifikations-Element) betrachtet das gleiche Szenario wie die DE 10 2009 001 959 A1, jedoch integriert das Computersystem des Nutzers bereits eine Schnittstelle zur Kommunikation mit dem Identifikations-Element.

Die beschriebenen Verfahren haben insbesondere den Nachteil, dass die Authentisierung und Nutzung eines Dienstes auf dem gleichen Computersystem stattfinden und so erhebliche Sicherheitsrisiken bestehen. Diese resultieren insbesondere durch das Aufzeichnen der PIN zum Freischalten des Identifilcations-Elements und somit einem Missbrauch durch unberechtigte Dritte.

Die vorliegende Erfindung soll die beschriebenen Nachteile kompensieren und eine sichere Authentisierung auf Basis eines Identifikations-Elements bieten, so dass Dienste auf einem unsicheren Computersystem genutzt werden können, ohne das vertrauliche Informationen wie Passwörter aufgezeichnet werden können.

Es ist Stand der Technik, dass Identifikations-Elemente für eine sichere Authentisierung benutzt werden. Ebenfalls haben sich mobile Endgeräte als Terminals für interne oder externe Identifikations-Elemente etabliert. Die Verfahren lassen aber Sicherheitsrisiken durch Schadsoftware auf einem Computersystem außen vor.

Die Erfindung stellt ein Verfahren gemäß Patentanspruch 1 und ein System gemäß Patentanspruch 17 bereit. Bevorzugte Weiterbildungen sind in den abhängigen Ansprüchen angegeben. Die vorliegende Erfindung kompensiert oben genannte Sicherheitsrisiken und bietet eine zusätzliche Mehr-Kanal-Authentisierung auf Basis mehrerer Vertrauensanker. Damit kann die Sicherheit des Passwortes (z. B. einer PIN) des Benutzers, was im Allgemeinen zum Freischalten des Identifikations-Elements bzw. zur Authentisierung des Benutzers gegenüber dem Identifikations-Element verwendet wird, auch bei der Dienstnutzung über ein nicht sicheres Computersystem gewahrt bleiben.

Die vorgelegte Erfindung betrachtet ein Computersystem, das zum Aufruf und zur Nutzung eines Dienstes verwendet wird, aber im Allgemeinen nicht vertrauenswürdig ist. Dies kann beispielsweise ein öffentlich zugängliches Computersystem, ein Computersystem eines anderen Nutzers oder auch ein Computersystem mit mehreren Nutzern sein. Als Beispiele seinen Computer in Internet-Cafes, Copy-Shops, Kaufhäusern oder Flughafen-Terminals genannt.

Die sichere Authentisierung und Identifizierung erfolgt gemäß dem vorliegenden Verfahren mit einem personalisierten Identifikations-Element und einem weiteren Computersystem. Dieses Computersystem kann insbesondere dem Nutzer zugeordnet sein, wie beispielsweise ein privater Computer oder das eigene Smartphone, und bietet somit eine vertrauenswürdige Plattform. Dieses Computersystem ist mit einer Schnittstelle zur Interaktion mit dem Identifikations-Element ausgestattet.

Die Dienste werden von einem Computersystem bereitgestellt und sind über ein Netzwerk zugänglich. Die Nutzung der Dienste erfordert eine Authentisierung oder Identifizierung bei erstmaliger Nutzung. Die Authentisierung oder Identifizierung wird von einem weiteren Computersystem durchgeführt und erlaubt in Zusammenhang mit dem Identifikations-Element einen sicheren, vertraulichen und integeren Identitätsnachweis des Nutzers.

Die Erfindung ermöglicht die Nutzung von Diensten eines Dienstanbieters auf einem Computersystem durch eine sichere Authentisierung mit einem vertrauenswürdigen Computersystem und einem Identifikations-Element, so dass keine physikalische Verbindung zwischen Computersystem für die Nutzung und dem Computersystem für die Authentisierung oder Identifizierung besteht. Damit müssen sensible Informationen, wie zum Beispiel ein Passwort zur Freischaltung des Identifilcations-Elements, nicht auf einem unsicheren System eingegeben werden.
Die Erfindung wird im Folgenden unter Verweis auf die beigefügten Figuren näher erläutert. Es zeigen:
Fig. 1 die einzelnen Parteien des erfindungsgemäßen Verfahrens;
Fig. 2 eine Darstellung wie in Fig. 1, jedoch ergänzt um eine Darstellung der Funktionalitäten der Parteien;
Fig. 3 eine Ausführungsform des erfindungsgemäßen Verfahrens;
Fig. 4 und Fig. 5 eine Ausführungsform des erfindungsgemäßen Verfahrens;
Fig. 6 eine alternative Ausführungsform der Erfindung;
Fig. 7 eine Nutzereingabe; und
Fig. 8 eine weitere Ausführungsform der Erfindung.

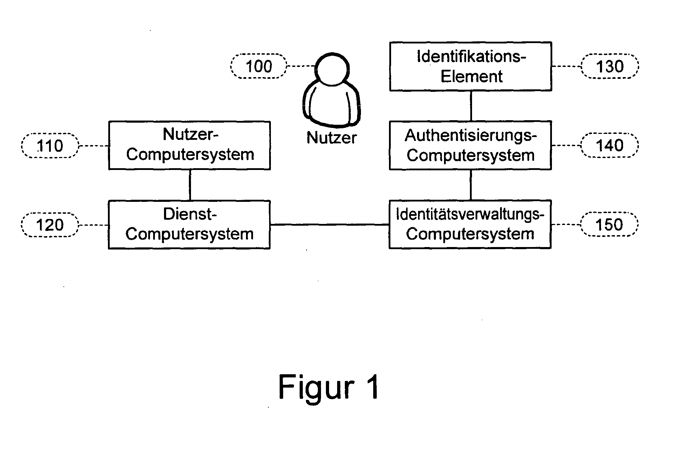

Fig. 1 zeigt die einzelnen Parteien des gemäß der Erfindung vorgestellten Verfahrens. Das Verfahren beinhaltet folgende Schritte: Der Nutzer (100) ruft von einem Nutzer-Computersystem (110) einen Dienst eines Dienst-Computersystems (120) auf. Für die Nutzung des Dienstes ist eine Authentisierung oder Identifizierung notwendig. Der Nutzer führt mit seinem Identifikations-Element (130) und einem Authentisierungs-Computersystem (140) die Authentisierung gegenüber dem Identity-Provider-Computersystem (Identitätsverwaltungs-Computersystem) (150) durch. Dieses bestätigt die Identität des Nutzers dem Dienst-Computersystem, welches darauf die Nutzung des Dienstes auf dem Nutzer-Computersystem gestattet.

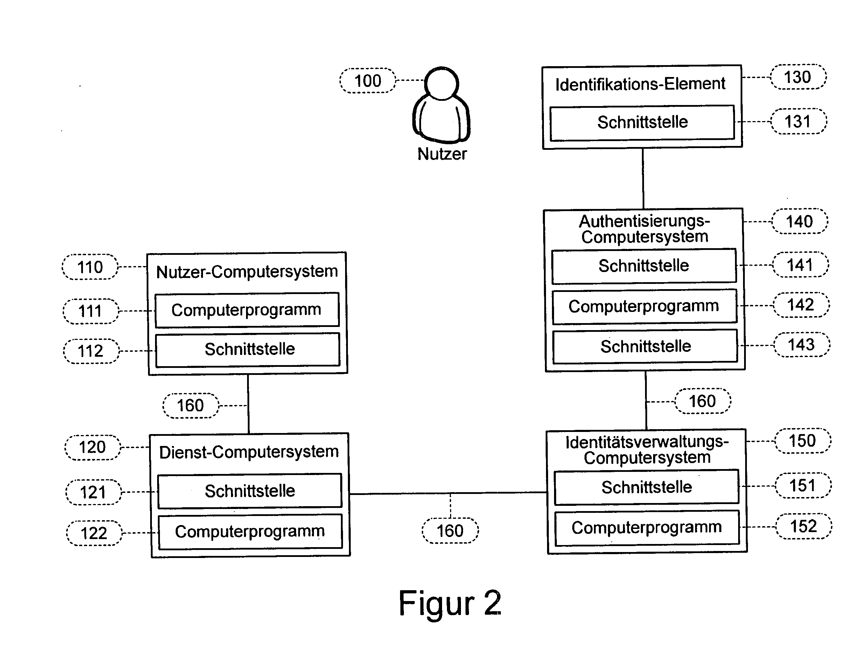

Fig. 2 zeigt den Nutzer (100) und das Nutzer-Computersystem (110). Das Nutzer-Computersystem kann sowohl ein stationärer Rechner, als auch ein tragbarer Computer (Notebook, Netbook, Tablet) sowie ein mobiles Endgerät wie Mobilfunktelefon und Smartphone sein. Das Computersystem hat mindestens ein Computerprogramm (111) zum Ausführen von Programminstruktionen. Das Nutzer-Computersystem besitzt mindestens eine Schnittstelle (112) zur Kommunikation mit einem Computernetzwerk (160). Die Schnittstelle kann beispielsweise als WLAN, ISDN, DSL, GSM, UTMS oder HSDPA ausgebildet sein.

Bei dem Computernetzwerk (160) kann es sich um ein Netzwerk handeln, das sowohl auf eine lokale Ausdehnung beschränkt ist, wie zum Beispiel ein Heim- oder Firmennetzwerk, oder sich auf einen großen Bereich erstreckt, wie beispielsweise das Internet.

Das Nutzer-Computersystem dient dem Zugriff des Nutzers auf Dienste des Dienst-Coznputersystems (120). Das Nutzer-Computersystem verfügbar beispielsweise über einen Web-Browser um Online-Angebote und Online-Anwendungen zu nutzen. Auf dem Nutzer-Computersystem können aber auch Anwendungen installiert sein, die automatisch auf Dienste des Dienst-Computersystems zugreifen oder diese direkt integrieren, so dass der Benutzer den Dienst nicht explizit aufrufen muss. Dies kann beispielsweise bei einer Anwendung der Fall sein, die direkt mit einer Online-Anwendung verknüpft ist.

Das Dienst-Computersystem (120) besitzt mindestens eine Schnittstelle (121) zur Kommunikation mit dem Netzwerk (160). Zusätzlich hat das Dienst-Computersystem ein Computerprogramm (122) zum Ausführen von Programminstruktionen. Die Programminstruktionen beinhaltet unter anderem das Bereitstellen von Diensten, das Aufbauen einer gesicherten Verbindung zwischen Dienst-Computersystem und Nutzer-Computersystem sowie Identitätsverwaltungs-Computersystem.

Bei dem Identifikations-Element (130) handelt es sich um ein tragbares elektronisches Gerät. Dies kann beispielsweise ein USB-Stick, Dongle oder eine Chipkarte sein. Zu den Chipkarten zählen insbesondere Kredit- und EC-Karten sowie Ausweisdokumente, wie zum Beispiel Reisepass, Personalausweis, Aufenthaltstitel, Führerschein, Gesundheitskarte und Firmenausweis. Das Identifikations-Element besitzt mindestens eine Schnittstelle (131), die kontaktlos oder kontaktbehaftet ausgeprägt sein kann. Bei der Schnittstelle kann es sich beispielsweise um eine klassische Magnetstreifen-Schnittstelle oder Bluetooth, WLAN und insbesondere RFID (Radio-frequency Identification) handeln. Das Identifikations-Element beinhaltet mindestens ein Attribut bezüglich der Identität des Nutzers. Bei den Attributen kann es sich unter anderem um Name, Anschrift, Alter und biometrische Daten handeln. Neben personenbezogenen Attributen kann das Identifikations-Element auch Attribute zur Authentisierung oder Identifizierung beinhalteten, die die Anonymität des Nutzers gewährt. Das Identifiₖations-Element unterstützt ebenfalls Verfahren zur Authentisierung von Nutzern, wie beispielsweise anhand einer PIN und Verfahren zur Authentisierung von anderen Computersystemen, sowie Verfahren zum Aufbau einer gesicherten Verbindung zwischen dem Identifikations-Element und einem Computersystem. Bei diesen Computersystemen kann es sich um einen Chipkartenleser aber auch um Computersysteme wie Server, Computer, Notebook und Smartphone handeln.

Das Authentisierungs-Computersystem (140) kann sowohl ein stationärer Rechner, als auch ein tragbarer Computer (Notebook, Netbook) sowie ein mobiles Endgerät, wie Mobilfunktelefon und Smartphone, sein. Das Authentisierungs-Computersystem fungiert gemäß der Erfindung als Computersystem für die Authentisierung. Dies kann insbesondere ein privates bzw. eigenes vertrauenswürdiges Computersystem, wie zum Beispiel der Heimcomputer oder das Smartphone, sein. Das Authentisierungs-Computersystem hat mindestens ein Computerprogramm (122) zum Ausführen von Programminstruktionen. Die Programminstruktionen dienen beispielsweise der Durchführung von kryptographischen Verfahren zur Absicherung der Kommunikation zwischen den einzelnen Parteien. Das Computerprogramm kann auch Verfahren zur Benutzerinteraktion und insbesondere zur Eingabe einer PIN verwendet werden.

Das Authentisierungs-Computersystem hat mindestens eine Schnittstelle (141) zur Kommunikation mit dem Identifikations-Element. Diese kann sowohl kontaktbehaftet als auch kontaktlos sein. Für die kontaktlos Kommunikation kann beispielsweise Bluetooth, Infrarot, WLAN und insbesondere RFID und Near Field Communication (NFC) verwendet werden. Alternativ kann an die Kommunikationsschnittstelle (141) auch ein weiteres Gerät angeschlossen werden, das die Kommunikation mit dem Identifikations-Element herstellen kann. Bei einem solchen Gerät kann es sich beispielsweise um einen kontaktbehafteten oder kontaktlosen Chipkartenleser handeln. Das Authentisierungs-Computersystem besitzt mindestens eine Schnittstelle (143) zur Kommunikation mit einem Computernetzwerk (160).

Das Authentisierungs-Computersystem kann über einen TPM (Trusted Plattform Module), MTM (Mobile Trusted Module) oder Hardware-Sicherheitsmodul verfügen um eine vertrauenswürdige Plattform zu etablieren.

Das Identitätsverwaltungs-Computersystem (150) besitzt mindestens eine Schnittstelle (151) zur Kommunikation mit dem Netzwerk (160). Zusätzlich hat das Identitätsverwaltungs-Computersystem ein Computerprogramm (152) zum Ausführen von Programminstruktionen.

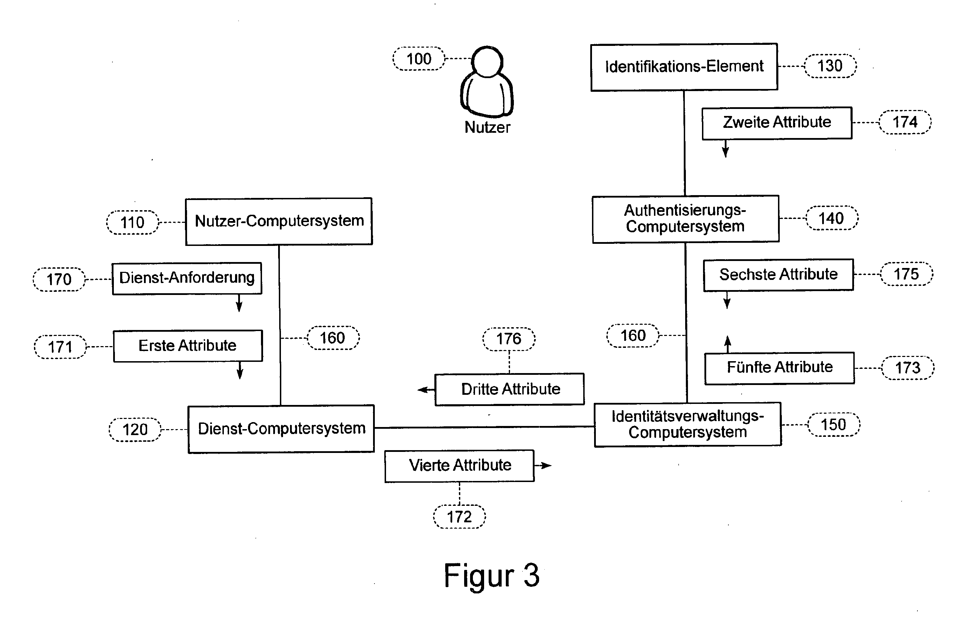

In Fig. 3 ist eine Ausführungsform des Verfahrens dargestellt. Zu Beginn führt der Nutzer (110) eine Eingabe auf dem Dienst-Computersystem (110) durch, um einen Dienst des Dienst-Computersystems (120) aufzurufen. Das Dienst-Computersystem sendet eine Eingabeaufforderung an den Nutzer. Die Eingabe (erste Attribute (171)) wird vom Nutzer-Computersystem zurück an das Dienst-Computersystem übertragen. Das Dienst-Computersystem übermittelt die vierten Attribute (172) an das Identitätsverwaltungs-Computersystem (150). Diese bestimmt das Authentisierungs-Computersystem und übermittelt die fünften Attribute (173) an das Authentisierungs-Computersystem. Das Authentisierungs-Computersystem fordert den Nutzer zu einer Eingabe für die Authentisierung zwischen Authentisierungs-Computersystem bzw. Nutzer und dem Identifikations-Element (130) auf. Es folgt eine gegenseitige Authentisierung zwischen Identifikations-Element und Identitätsverwaltungs-Computersystem. Die Kommunikation zwischen Identifikations-Element und Identitätsverwaltungs-Computersystem wird über das Authentisierungs-Computersystem geleitet. Das Identifikations-Element übermittelt die zweiten Attribute (174) an das Identitätsverwaltungs-Computersystem. Das Identitätsverwaltungs-Computersystem sendet darauf die dritten Attribute (176) an das Dienst-Computersystem, welches abschließend die Nutzung der Dienste über das Nutzer-Computersystem gestattet.

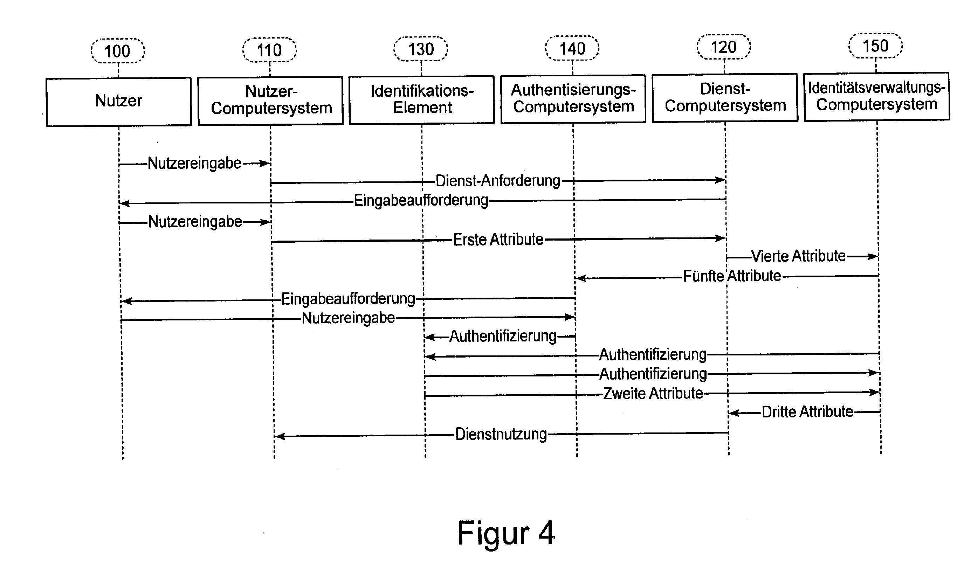

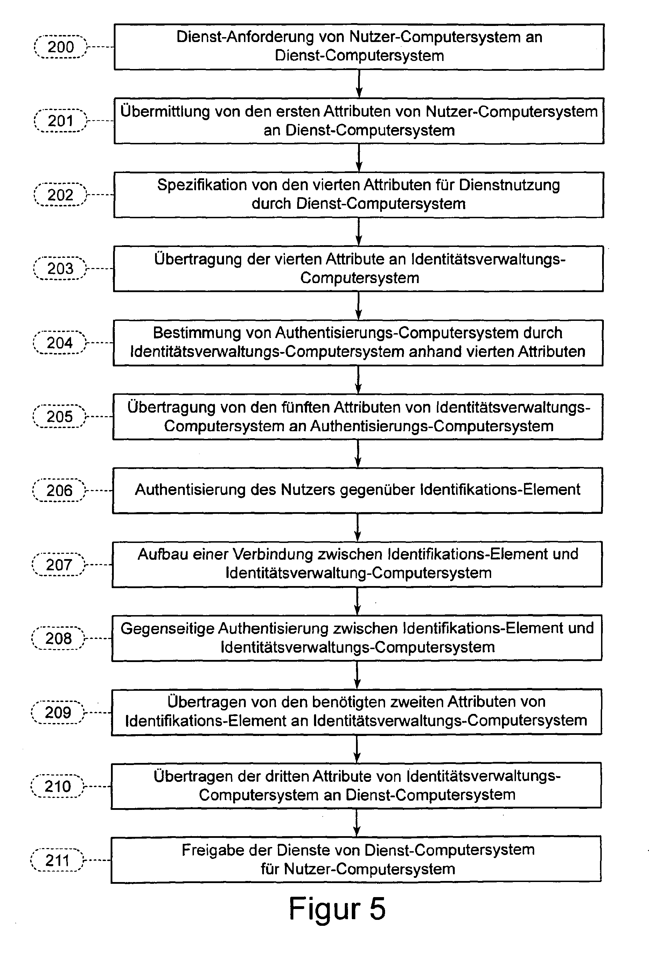

In Fig. 4 und Fig. 5 ist eine Ausführungsform des erfindungsgemäßen Verfahrens dargestellt. Im ersten Schritt (200) wird eine Dienst-Anforderung (170) von dem Nutzer-Computersystem (110) aus an das Dienst-Computersystem (120) gesendet. Dies kann beispielsweise direkt durch den Nutzer (100) erfolgen, zum Beispiel durch Eingabe einer URL (Uniform Resource Locator) in einem Browser-Programm und damit durch den Aufruf eines direkten Angebotes. Eine andere Möglichkeit ist das Ausführen einer Aktion wodurch der zuständige Dienst bestimmt werden kann, wie zum Beispiel durch das Starten eines Programms, welches mit Diensten eines Dienst-Computersystems verbunden ist.

Im nächsten Schritt (201) übermittelt der Nutzer (100) zusätzliche erste Attribute (171) an das Dienst-Computersystem (120). Dies erfolgt beispielsweise durch eine Eingabeaufforderung im Browser oder die ersten Attribute sind bereits auf dem Nutzer-Computersystem gespeichert und werden automatisch übermittelt. Bei den ersten Attributen kann es sich insbesondere um eine Nutzerkennung handeln, die es dem Identitätsverwaltungs-Computersystem (150) ermöglicht das Authentisierungs-Computersystem (140) zu bestimmen. Zum Beispiel kann die Nutzerkennung eine Mobilfunknummer, Email-Adresse, IP-Adresse oder sonstige URI (Uniform Resource Identifier) sein.

Im folgenden Schritt (202) definiert das Dienst-Computersystem die benötigten vierten Attribute (172), die für eine Authentisierung oder Identifizierung des Nutzers notwendig sind. Die vierten Attribute können beispielsweise eine Liste von Identitätsmerkmalen wie Name, Vorname, Anschrift, Alter, Wohnort, Geburtsort, Staatsangehörigkeit, Geschlecht oder sonstige elektronischen Identitäten sein. Die vierten Attribute (172) werden zusammen mit den vorher erhaltenen ersten Attributen (171) in Schritt (203) an das Identitätsverwaltungs-Computersystem (140) übermittelt.

Das Identitätsverwaltungs-Computersystem bestimmt in Schritt (204) das Authentisierungs-Computersystem (120) anhand der ersten Attribute (171) und sendet im darauffolgenden Schritt (205) eine Nachricht mit weiteren fünften Attributen (173) an das Authentisierungs-Computersystem (120). Dies kann beispielsweise durch eine SMS, MMS, Email oder Datenpakete auf Basis von Internetprotokollen wie beispielsweise Push-Registry bei der Java Micro Edition Plattform erfolgen. Die fünften Attribute (173) können unter anderem Informationen bezüglich des Identitätsverwaltungs-Computersystems und Dienst-Computersystems beinhalten, die für Benutzerinformationen, Authentisierung und Verifizierung notwendig sind. Zusätzlich enthalten die fünften Attribute (173) die vom Dienst-Computersystem definierten vierten Attribute (172). Das Übermitteln der fünften Attribute (173) in Schritt (205) löst das Starten des Computerprogramms (142) auf dem Authentisierungs-Computersystem aus. Möglich ist auch, dass das Computerprogramm bereits gestartet ist und auf einer bestimmten Adresse (z.B. Port, Socket) der Schnittstelle (143) lauscht und die Nachricht entgegen nimmt.

In Schritt (206) folgt eine Authentisierung des Nutzers gegenüber dem Identifikations-Element. Dabei können beispielsweise Passwort-basierte Protokolle wie PACE (Password Authenticated Connection Establishment), Encrypted Key Exchange (EKE), SPEKE (Simple Password Exponential Key Exchange), Augmented-Encrypted Key Exchange (A-EKE), Diffie-Hellman Encrypted Key Exchange (DH-EKE), Password Authenticated Key Exchange (PAK) oder Open Key Exchange (OKE) verwendet werden.

Im folgenden Schritt (207) wird eine Verbindung zwischen dem Identifikations-Element (110) und dem Identitätsverwaltungs-Computersystem aufgebaut. Das Authentisierungs-Computersystem (120) fungiert hierbei als Vermittler und Intermediär.

Dann folgt in Schritt (208) eine Authentisierung zwischen dem Identifikations-Element (110) und dem Identitätsverwaltungs-Computersystem. Die Authentisierung kann sowohl einseitig als auch gegenseitig erfolgen. Die Authentisierung kann beispielsweise auf Basis von Zertifikaten und einer Public-Key-Infrastruktur oder mittels eines gemeinsamen Geheimnisses erfolgen.

In Schritt (209) erfolgt die Übertragung der erforderlichen zweiten Attribute (174) vom Identifikations-Element (130) zum Identitätsverwaltungs-Computersystem (150). Diese zweiten Attribute (174) werden dann in Schritt (210) vom Identitätsverwaltungs-Computersystem an das Dienst-Computersystem (120) übertragen.

Abschließend erfolgt in Schritt (211) die Freischaltung der Dienste für das Nutzer-Computersystem.

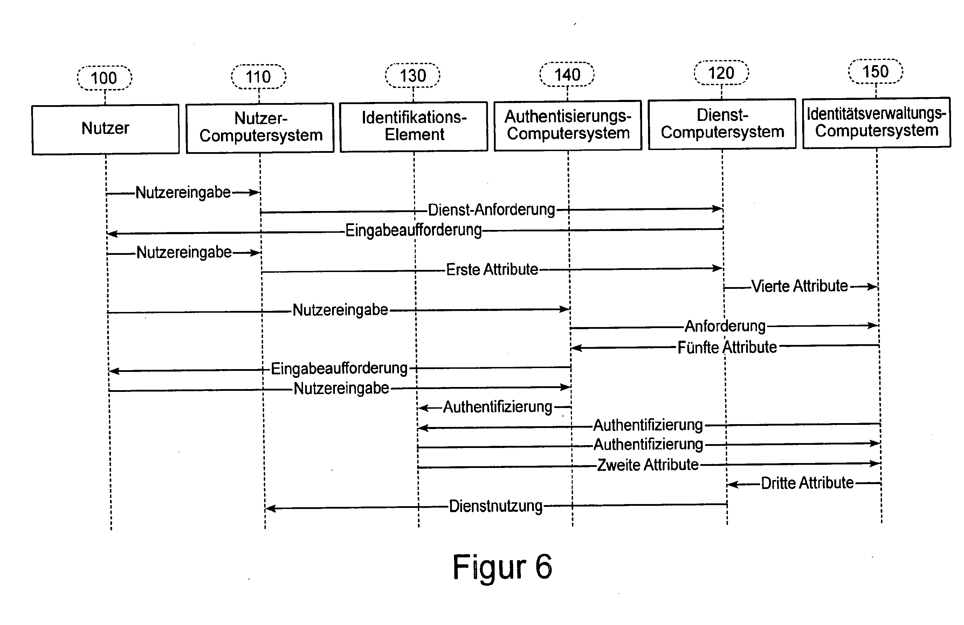

In einer alternativen Ausführungsform der Erfindung, wie in Fig. 6 dargestellt, kann Schritt (205) auch in umgekehrter Reihenfolge geschehen, so dass das Authentisierungs-Computersystem die fünften Attribute (173) vom Identitätsverwaltungs-Computersystem anfordert. Der Nutzer muss dazu eine Eingabe auf dem Authentisierungs-Computersystem tätigen, so dass das Computersystem das Identitätsverwaltungs-Computersystem bestimmen kann. Zusätzlich muss das Identitätsverwaltungs-Computersystem anhand der Eingabe auch das Authentisierungs-Computersystem dem Nutzer-Computersystem, genauer gesagt der Dienst-Anforderung, zuordnen. Der Nutzer kann beispielsweise die Adresse (URL) des Identitätsverwaltungs-Computersystems und eine Zahlenkombination in einem Browser des Authentisierungs-Computersystems eingeben oder durch Starten des Computerprogrammes das Anfordern der fünften Attribute (173) auslösen. Denkbar ist auch ein erfassen einen Bildes, Barcode und QR-Code (Quick-Response-Code) durch die Kamera des Authentisierungs-Computersystems im Falle eines Smartphone oder auch das Aufnehmen eines Audiosignals.

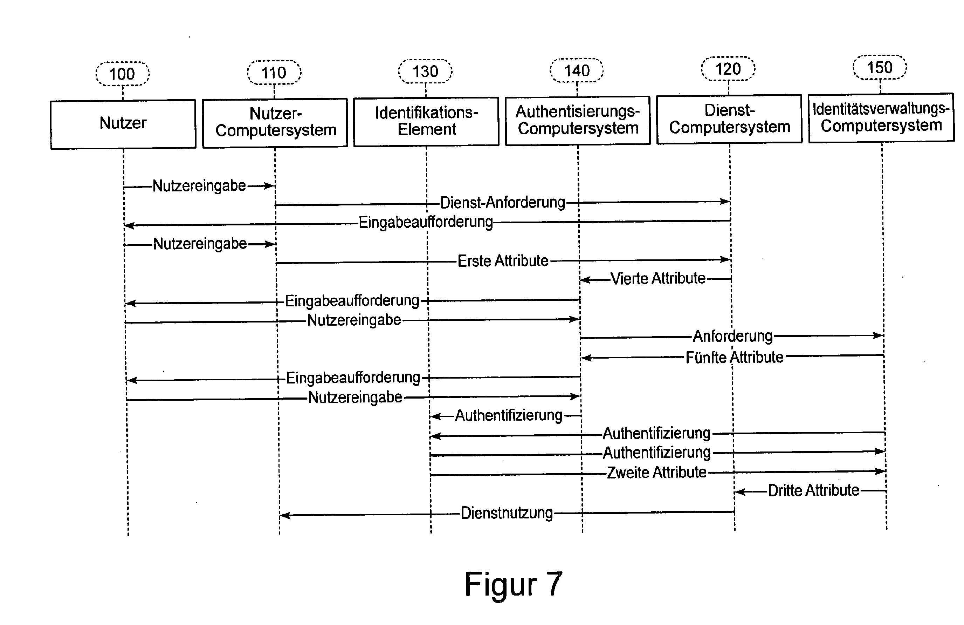

In einer weiteren Ausführungsform der Erfindung ist es möglich, dass, wie in Fig. 7 dargestellt, die vierten Attribute (172) vom Dienstsystem nicht an das Identitätsverwaltungs-Computersystem gesendet werden, sondern an das Authentisierungs-Computersystem. Die vierten Attribute können beispielsweise bereits Informationen zum Identitätsverwaltungs-Computersystem enthalten, so dass die in Fig. 7 aufgezeigte Nutzereingabe entfällt. Oder der Nutzer definiert an dieser Stelle durch Eingabe das Identitätsverwaltungs-Computersystem. Die Auswahl erlaubt beispielsweise, dass der Nutzer zwischen verschiedenen Identitätsverwaltungs-Computersystemen wählen kann.

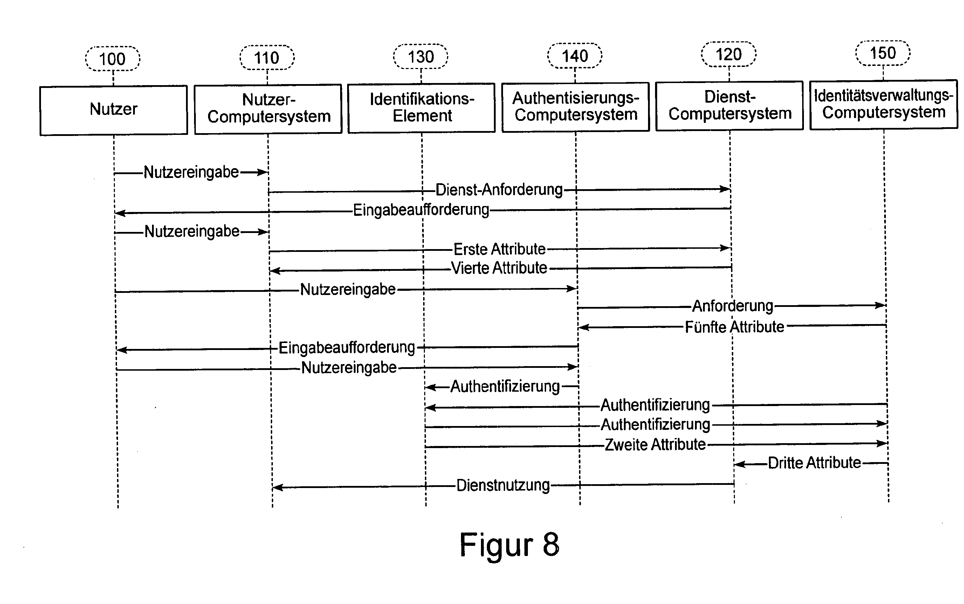

Fig. 8 stellt eine weitere Ausführungsform der Erfindung dar. Dabei werden die vierten Attribute (172) zurück an das Nutzersystem gesendet. Der Nutzer muss dann (vgl. F ig. 6) die Zuordnung zwischen Authentisierungs-Computersystem und Identitätsverwaltungs-Computersystem vornehmen.
Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend zu verschiedenen Aspekten und/oder Ausführungsformen genannt oder gezeigt sind.
Die Erfindung umfasst ebenfalls einzelne Merkmale in den Figuren auch wenn sie dort im Zusammenhang mit anderen Merkmalen gezeigt sind und/oder vorstehend nicht genannt sind.
Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

### Bezugszeichenliste

- 100: Nutzer
- 110: Nutzer-Computersystem
- 111: Computerprogramm
- 112: Schnittstelle
- 120: Dienst-Computersystem
- 121: Schnittstelle
- 122: Computerprogramm
- 130: Identifikations-Element
- 131: Schnittstelle
- 140: Authentisierungs-Computersystem
- 141: Schnittstelle
- 142: Computerprogramm
- 143: Schnittstelle
- 150: Identitätsverwaltungs-Computersystem
- 151: Schnittstelle
- 152: Computerprogramm
- 160: Computernetzwerk
- 170: Dienst-Anforderung
- 171: erste Attribute
- 172: vierte Attribute
- 173: fünfte Attribute
- 174: zweite Attribute
- 175: sechste Attribute
- 176: dritte Attribute

## Patentansprüche

1. Verfahren zur Authentisierung und Identifizierung eines Nutzers (100), zum Zugriff auf Dienste eines Dienst-Computersystems (120) über ein Nutzer-Computersystem (110), unter Einbezug eines personalisierten Identifikations-Elements (130), Authentisierungs-Computersystems (140) und Identitätsverwaltungs-Computersystems (150), mit folgenden Schritten:
- Senden einer Dienst-Anforderung (170) durch Nutzer (100) von Nutzer-Computersystem an Dienst-Computersystem (120),
- Zuordnung von Nutzer-Computersystem und Dienst-Anforderung anhand von ersten Attributen (171),
- Authentisierung zwischen Nutzer (100) und dem Identifikations-Elenlent (130),
- Authentisierung zwischen dem Identifikations-Element und dem Identitätsverwaltungs-Computersystem,
- Lesen von zweiten Attributen (174) aus dem Identifikations-Element,
- Übermitteln von dritten Attributen (176) an Dienst-Computersystem,
- Freigabe von Diensten des Dienst-Computersystems für Nutzer-Computersystem.

2. Verfahren nach Anspruch 1, **dadurch gekennzeichnet, dass** die Dienst-Anforderung (170) durch eine Interaktion des Nutzers, beispielsweise durch eine Eingabe des Nutzers, definiert ist, wobei eine Interaktion eine Eingabe des Benutzers, ein manuelles Starten einer Anwendung durch den Benutzer oder ein automatisches Starten durch externe Ereignisse sein kann.

3. Verfahren nach Anspruch 2, wobei mindestens ein Attribut der ersten Attribute (171) durch eine Benutzereingabe oder durch ein gespeichertes Attribut definiert ist.

4. Verfahren nach Anspruch 3, wobei die ersten Attribute (171) einen Identifikator des Authentisierungs-Computersystems aufweisen, wobei:
das Authentisierungs-Computersystem direkt aus dem Identifikator bestimmbar ist; oder
das Authentisierungs-Computersystem indirekt durch eine vorher vom Nutzer definierte Zuordnung bestimmbar ist, wobei ohne Kenntnis der Zuordnung das Authentisierungs-Computersystem anhand des Identifikator nicht bestimmbar ist.

5. Verfahren nach Anspruch 4, wobei die Bestimmung und/oder Adressierung des Authentisierungs-Computersystems anhand der ersten Attribute (171), vorzugsweise anhand des Identifikators, durch das Dienst-Computersystem oder vom Identitätsverwaltungs-Computersystem oder vom Nutzer durch Eingabe auf dem Authentisierungs-Computersystem durchgeführt wird.

6. Verfahren nach Anspruch 5, **dadurch gekennzeichnet, dass** vierte Attribute (172) mindestens eine Spezifikation von einem oder mehreren Attributen aufweisen, die für die Nutzung des Dienstes des Dienst-Computersystems vom Identifikations-Element oder dem Authentisierungs-Computersystem oder dem Identitätsverwaltungs-Computersystem übermittelt werden müssen.

7. Verfahren nach Anspruch 6, **dadurch gekennzeichnet, dass** vierte Attribute (172) vom Dienst-Computersystem an das Identitätsverwaltungs-Computersystem und/oder das Nutzer-Computersystem und/oder das Authentisierungs-Computersystem übermittelt werden.

8. Verfahren nach Anspruch 7, **dadurch gekennzeichnet, dass** fünfte Attribute (173) vom Identitätsverwaltungs-Computersystem an das Authentisierungs-Computersystem gesendet werden (Push-Verfahren).

9. Verfahren nach Anspruch 7, **dadurch gekennzeichnet, dass** das Authentisierungs-Computersystem die fünften Attribute (173) vom Identitätsverwaltungs-Computersystem anfordert (Pull-Verfahren).

10. Verfahren nach einem der Ansprüche 8 oder 9, **dadurch gekennzeichnet, dass** keine Verbindung zwischen Nutzer-Computersystem und Authentisierungs-Computersystem besteht.

11. Verfahren nach Anspruch 10, wobei eine Authentisierung zwischen dem Nutzer und dem Identifikations-Element durchgeführt wird.

12. Verfahren nach Anspruch 11, wobei eine Authentisierung zwischen dem Identifikations-Element und dem Identitätsverwaltungs-Computersystem durchgeführt wird.

13. Verfahren nach Anspruch 12, **dadurch gekennzeichnet, dass** die zweiten Attribute (174) vom Identifikations-Element gelesen werden.

14. Verfahren nach Anspruch 13, wobei das Identifikations-Element über Mittel zur Authentisierung des Nutzers, des Identitätsverwaltungs-Computersystems sowie zum Aufbau einer gesicherten Verbindung zum Authentisierungs-Computersystem und Identitätsverwaltungs-Computersystem verfügt.

15. Verfahren nach Anspruch 14, wobei das Nutzer-Computersystem, das Authentisierungs-Computersystem, das Dienst-Computersystem und das Identitätsverwaltungs-Computersystem Mittel für eine gesicherte Verbindung besitzen.

16. Computerprogrammprodukte für das Authentisierungs-Computersystem und/oder das Dienst-Computersystem und/oder das Identitätsverwaltungs-Computersystem mit Instruktionen zur Durchführung aller Schritte des Verfahrens nach mindestens einem der Ansprüche 1 bis 15.

17. System zur Authentisierung und Identifizierung eines Nutzers (100) für den Zugriff auf Dienste eines Dienst-Computersystems (120) über ein Nutzer-Computersystem (110), mit: einem Identifikations-Element, einem Authentisierungs-Computersystem und einem Identitätsverwaltungs-Computersystem, wobei
das Nutzer-Computersystem und das Dienst-Computersystem geeignet sind, miteinander Daten auszutauschen,
das Dienst-Computersystem und das Identitätsverwaltungs-Computersystem geeignet sind, miteinander Daten auszutauschen,
das Identitätsverwaltungs-Computersystem und das Authentisierungs-Computersystem geeignet sind, miteinander Daten auszutauschen, und
das Authentisierungs-Computersystem und das Identifikations-Element geeignet sind, miteinander Daten auszutauschen,
wobei
keine direkte Verbindung zwischen dem Identifikations-Element und dem Nutzer-Computersystem und keine direkte Verbindung zwischen dem Authentisierungs-Computersystem und dem Nutzer-Computersystem besteht.
